# EUROPÄISCHE PATENTSCHRIFT

(11) **EP 3 001 028 B1**
(45) Veröffentlichungstag und Bekanntmachung des Hinweises auf die Patenterteilung: **19.02.2020**
(21) Anmeldenummer: 14185923.1
(22) Anmeldetag: 23.09.2014
(51) Int. Cl.: F03D 1/00, F03D 1/06

(54) **Spinner für eine Rotornabe**
Spinner for a rotor hub
Cône pour un moyeu de rotor

(43) Veröffentlichungstag der Anmeldung: 30.03.2016
(73) Patentinhaber: Nordex Energy GmbH, 22419 Hamburg (DE)
(72) Erfinder: Kathöfer, Sebastian, 17168 Groß Wüstenfelde (DE)
(74) Vertreter: Hauck Patentanwaltspartnerschaft mbB

(56) Entgegenhaltungen:
- WO-A1-2014/020638
- DE-A1-102012 201 088
- US-A1- 2007 119 185
- US-A1- 2007 222 223
- US-A1- 2013 236 311

## Beschreibung

Die vorliegende Erfindung betrifft einen Spinner für eine Rotornabe einer Windenergieanlage.

Bei einem sogenannten Spinner handelt es sich um eine Verkleidung der Rotornabe. Für die an der Rotornabe vorgesehenen Rotorblätter besitzt der Spinner drei im Umfang gleichmäßig verteilte Rotorblattöffnungen, durch die jeweils ein Rotorblattanschluss in der Rotornabe zugänglich ist. Ferner besitzt der Spinner eine zentrale Wellenöffnung, in der die Verbindung der Rotornabe zum Triebstrang erfolgt. Die Wellenöffnung zeigt dabei zu dem Maschinenhaus der Windenergieanlage.

Aus US D699,184 S ist ein Spinner für eine Windenergieanlage bekannt geworden, bei der der Spinner drei Ausbuchtungsabschnitte aufweist, deren Gesamtquerschnitt sich hinführend zu einer zur Wellenöffnung weisenden Seite des Spinners stetig vergrößert. Die drei Ausbuchtungsabschnitte verleihen dem Spinner im Bereich seiner Wellenöffnung einen unrunden, im Wesentlichen dreieckigen Querschnitt. Als nachteilig an dem bekannten Spinner hat sich herausgestellt, dass bei größeren Windenergieanlagen die zulässigen maximalen Transportmaße, gerade im Bereich der Wellenöffnung, überschritten werden können.

Aus WO 2014/059996 A1 ist eine Windenergieanlage mit einem Spinner bekannt, bei der an der Rotornabe eine im Wesentlichen horizontal angeordnete Arbeitsplattform vorgesehen ist. Eine Person kann dann in einem Raum zwischen dem Spinner und dem Gehäuse der Rotornabe arbeiteten. Auch bei diesem Spinner sind Ausbuchtungsbereiche zwischen den Anschlüssen für die Rotorblätter bekannt, über die zusätzlicher Raum zwischen dem Rotornabengehäuse und der Rotornabenverkleidung in Form eines Spinners geschaffen wird. Im Bereich der Wellenöffnung besitzt der Spinner eine im Wesentlichen dreieckige Kontur.

WO 2014/059994 A1 zeigt einen Spinner mit Ausbuchtungsabschnitten, bei dem im Bereich der Wellenöffnung Einstiegsöffnungen vorgesehen sind.

Aus WO 2014/020638, die als nächstliegender Stand der Technik angesehen wird, ist ein Spinner für eine Rotornabe einer Windenergieanlage gemäß dem Oberbegriff des Anspruchs 1 bekannt, der im Bereich des Rotorblattanschlusses eine lokale Ausbuchtung besitzt.

Aus US 2007/0222223 A1 ist eine Windenergieanlage mit einer unterstützenden Kühleinrichtung bekannt. Die Kühleinrichtung saugt im Bereich der Gondel Kühlluft an.

Aus US 2013/0236311 ist der Aufbau einer Rotornabe mit mehreren zusätzlichen Einstiegsöffnungen in die Rotornabe bekannt.

Der Erfindung liegt die Aufgabe zugrunde, einen Spinner für eine Rotornabe einer Windenergieanlage bereitzustellen, bei der mit einfachen Mitteln eine Verkleidung für die Rotornabe gebildet und ein ausreichender Arbeitsraum zwischen dem Spinner und der Rotornabe geboten wird, insbesondere für Arbeiten an der Außenseite der Rotornabe , ohne die Transportmaße unnötig zu vergrößern.

Erfindungsgemäß wird die Aufgabe durch einen Spinner mit den Merkmalen von Anspruch 1 gelöst. Vorteilhafte Ausgestaltungen bilden den Gegenstand der Unteransprüche.

Der erfindungsgemäße Spinner ist vorgesehen und bestimmt für eine Rotornabe einer Windenergieanlage. Der Spinner besitzt eine zentrale Wellenöffnung und drei gleichmäßig über seinen Umfang verteilte Rotorblattöffnungen für Rotorblattanschlüsse. Die Wellenöffnung besitzt eine Kreisform, deren Mittelpunkt auf einer Drehachse des Spinners liegt. Ferner ist zwischen zwei Rotorblattöffnungen des Spinners jeweils ein Ausbuchtungsabschnitt vorgesehen, der vorsteht. Der vorstehende Ausbuchtungsabschnitt besitzt einen Abstand zur Drehachse, der größer ist als der Abstand im Bereich der Rotorblattöffnungen. Es wird also im Bereich der Ausbuchtungsabschnitte zusätzlicher Raum zwischen dem Spinner und der Rotornabe, insbesondere für Arbeiten an der Außenseite der Rotornabe, geschaffen. Der Abstand bezieht sich hierbei auf die Innen- oder Außenseite der Wandung des Spinners.

Erfindungsgemäß besitzt der Spinner mit seinen Ausbuchtungsabschnitten an seiner zur Wellenöffnung weisenden Seite einen kreisförmigen Querschnitt. Der Querschnitt bezieht sich hierbei auf einen Schnitt senkrecht zur Drehachse des Spinners. Bei der erfindungsgemäßen Kontur besitzt der Spinner Ausbuchtungsabschnitte, die jedoch im Bereich der Wellenöffnung einen kreisförmigen Querschnitt des Spinners nicht verändern. Hierdurch werden die Transportmaße für den Spinner nicht vergrößert, obwohl Ausbuchtungsabschnitte mit zusätzlichem Volumen vorliegen. Der Erfindung liegt die Erkenntnis zugrunde, dass Ausbuchtungsabschnitte, die dem Spinner im Bereich der Wellenöffnung eine annähernd dreieckige Kontur verleihen, auch die Transportmaße deutlich vergrößern, während ein runder Querschnitt an der zur Wellenöffnung weisenden Seite hier nicht zu einer Vergrößerung der Transportmaße führt, ohne jedoch das Volumen innerhalb der Ausbuchtungsabschnitte zu stark einzuschränken. Erfindungsgemäß ist der Spinner mehrteilig ausgebildet, wobei ein Frontabschnitt als separates Bauteil ausgebildet ist, das lösbar an dem Spinner befestigt ist.

Erfindungsgemäß besitzt der Spinner einen Frontabschnitt, der eine Kreisform aufweist und dessen Mittelpunkt auf der Drehachse liegt. Die Ausbuchtungsabschnitte besitzen im Bereich des Frontabschnitts ebenfalls einen kreisförmigen Querschnitt.

In einer bevorzugten Ausgestaltung ist innerhalb mindestens eines der Ausbuchtungsabschnitte ein Arbeitsbereich vorgesehen, in dem Arbeiten an der Rotornabe selbst ausgeführt werden können. Darüber hinaus kann ein Zugang zu bestimmten Abschnitten im Inneren der Rotornabe bestehen.

In einer bevorzugten Weiterentwicklung der Erfindung besitzt mindestens einer der Ausbuchtungsabschnitte eine definierte Breite über den Umfang des Spinners der Windenergieanlage.

Die maximale Breite des mindestens einen Ausbuchtungsabschnitts entlang dem Umfang des Spinners entspricht dabei dem verbleibenden minimalen Abstand zwischen zwei benachbarten Rotorblattöffnungen.

Ein besonderer Vorteil des kreisförmigen Querschnitts im Bereich der Wellenöffnung liegt darin, dass der Spinner mit einem umlaufenden Regenabweiser ausgestattet werden kann, der die Wellenöffnung überragt. Anders als bei einem dreieckigen oder unrunden Querschnitt im Bereich der Wellenöffnung, erlaubt es der runde Querschnitt des Spinners, an der Seite der Wellenöffnung einen umlaufenden Regenabweiser vorzusehen.

Erfindungsgemäß besitzt jeder der Ausbuchtungsabschnitte in Umfangsrichtung auf seiner Innenseite eine ebene Tritt- und Standfläche. Auf der Tritt- und Standfläche kann ein Servicemitarbeiter in stehender Position Arbeiten an der Rotornabe ausführen.

Ein bevorzugtes Ausführungsbeispiel wird nachfolgend erläutert. Es zeigen:
- Fig. 1: eine Windenergieanlage in einer perspektivischen Ansicht von schräg vorne,
- Fig. 2: das Maschinenhaus mit Rotornabe und Spinner in einer perspektivischen Ansicht,
- Fig. 3a: Rotornabe und Spinner in einer perspektivischen Ansicht
- Fig. 3b: Rotornabe und Spinner in einer Schnittansicht von der Front und
- Fig. 4: den Spinner mit aufgesetztem Frontabschnitt in einer Ansicht von der Seite.

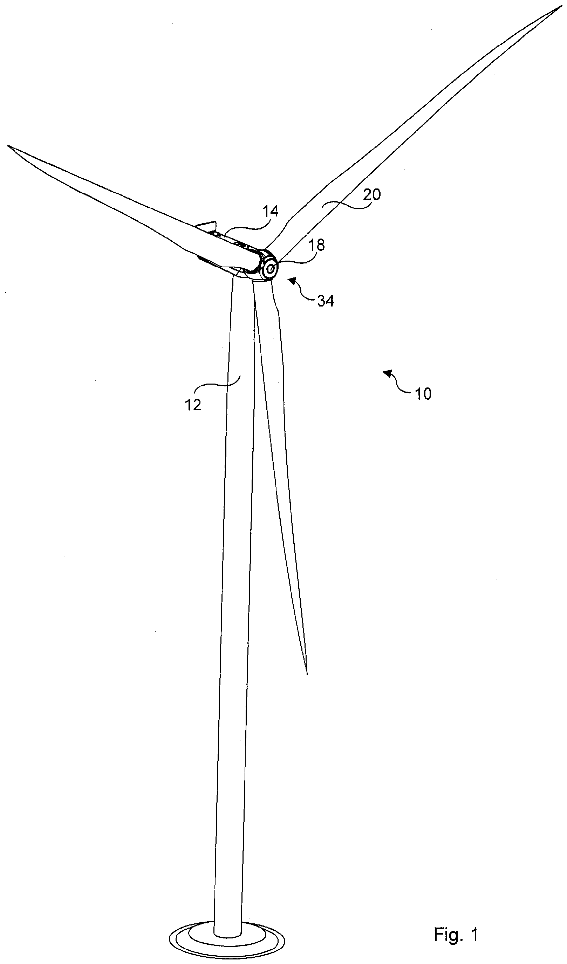

Fig. 1 zeigt ausschnittsweise eine Windenergieanlage 10, die einen Turm 12 besitzt, auf dem ein Maschinenhaus 14 angeordnet ist. Das Maschinenhaus 14 trägt an einem Ende eine Rotornabe 34, die mit einem Spinner 18 verkleidet ist. In radialer Richtung stehen drei Rotorblätter 20 aus dem Spinner 18 vor.

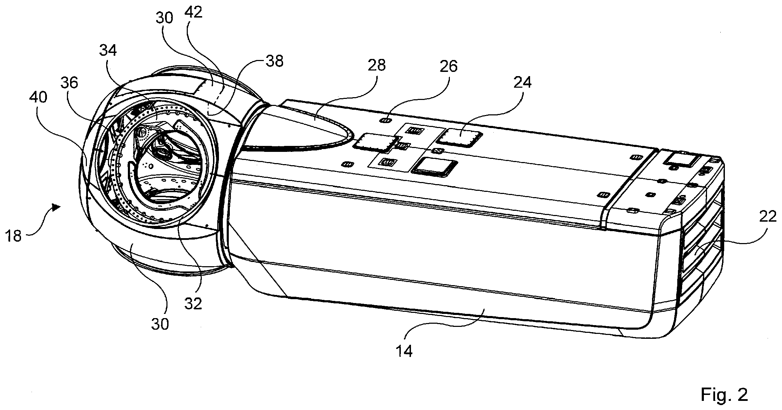

Fig. 2 zeigt das Maschinenhaus 14, das an seiner von der Rotornabe 34 abgewandten Seite Lüftungsöffnungen 22 besitzt. Auf dem Dach des Maschinenhauses 14 sind mehrere Luken 24 und Befestigungspunkte 26 für Arbeiten auf dem Maschinenhaus 14 vorgesehen. Rotorseitig besitzt das dargestellte Maschinenhaus 14 ebenfalls einen Anschlussbereich 28, der einen Übergang von dem ebenen Dach des Maschinenhauses 14 zu der runden Struktur des Spinners 18 schafft. Der Anschlussbereich 28 ist hierbei als ein im Wesentlichen dreieckiges Bauteil mit einer gewölbten Kontur ausgebildet. Die Wölbung ist dabei so bemessen, dass ihre Höhe mit zunehmender Nähe zu dem Spinner 18 zunimmt. Hierdurch entsteht eine in Richtung zum Spinner 18 hin zunehmende Wölbung, die an dem zur Rotornabe 34 weisenden Ende des Maschinenhauses 14 der Krümmung des Spinners 18 entspricht.

Der Spinner 18 besitzt drei Ausbuchtungsabschnitte 30, von denen in Fig. 2 lediglich zwei zu erkennen sind. Zwischen den Ausbuchtungsabschnitten 30 sind Rotorblattöffnungen 32 zu erkennen, die den Blick auf die im Spinner 18 angeordnete Rotornabe 34 freigeben. Die Rotorblattöffnungen 32 besitzen jeweils eine runde Form und liegen mit ihrem Rand in einer Ebene. Zur besseren Orientierung ist in Fig. 2 der ebene Befestigungsflansch 36 der Rotornabe 34 mit seinen Bohrungen dargestellt, an dem die Wurzel des Rotorblatts (nicht dargestellt) befestigt wird.

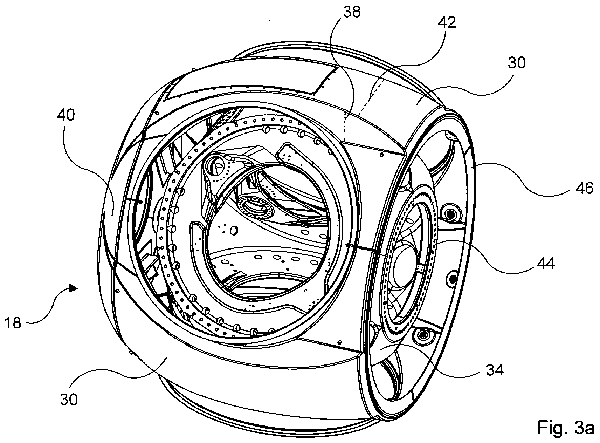

Deutlich ist in Fig. 2 die Geometrie des Ausbuchtungsabschnitts 30 zu erkennen. Der Ausbuchtungsabschnitt 30 beginnt an der zum Maschinenhaus 14 weisenden Seite des Spinners 18. Hier besitzt der Ausbuchtungsabschnitt 30 eine geringe oder eine verschwindende Höhe 38, so dass die runde Form des Spinners 18 im Bereich der Wellenöffnung vor einem Übergang zum Maschinenhaus 14 erhalten bleibt (vgl. Fig. 3a). Ausgehend vom Bereich der Wellenöffnung besitzt der Ausbuchtungsabschnitt 30 dann eine zunehmende Höhe 38, mit der er vorsteht und die zum Frontabschnitt 40 hin wieder abnimmt. Der Ausbuchtungsabschnitt 30 besitzt somit auch im Bereich des Frontabschnitts 40 wieder eine verschwindende Höhe. Der Frontabschnitt 40 ist in einer bevorzugten Ausgestaltung als separates Bauteil ausgebildet, das lösbar an einem Grundkörper des Spinners 18 befestigbar ist. Die mit einer gestrichelten Linie angedeutete Breite 42 ist im Wesentlichen über die gesamte Länge des Ausbuchtungsabschnitts 30 konstant (vgl. Fig. 3a). Die maximale Breite 42 des Ausbuchtungsabschnitts 30 ist durch den minimalen Abstand zwischen den Rotorblattöffnungen 32 vorgegeben.

Fig. 3a zeigt den Spinner 18 zusammen mit der Rotornabe 34 ohne das Maschinenhaus 14. Deutlich zu erkennen ist der kreisförmige Anschluss 44 der Rotornabe 34, mit dem die Rotornabe an einen vorstehenden Befestigungsabschnitt des Triebstrangs (nicht dargestellt) montiert werden kann. Der an der Rotornabe 34 befestigte Spinner 18 besitzt eine konzentrisch zum kreisförmigen Anschluss 44 angeordnete runde Wellenöffnung 46. Deutlich ist in Fig. 3a zu erkennen, dass auch die Ausbuchtungsabschnitte 30, bedingt durch ihre verschwindende Höhe 38 im Bereich der Wellenöffnung 46, einen kreisförmigen Querschnitt bilden.

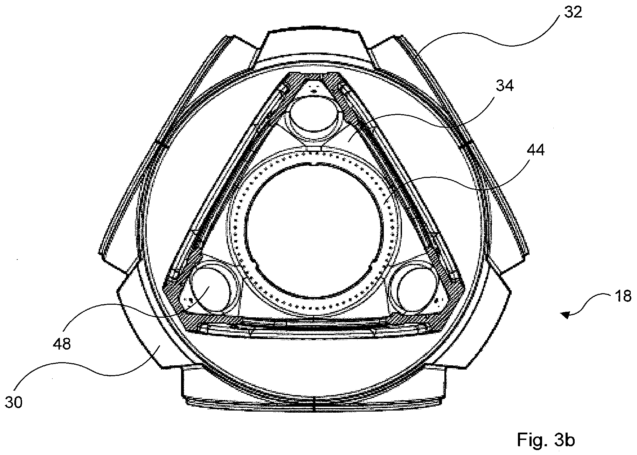

Fig. 3b zeigt den Spinner 18 zusammen mit der Rotornabe 34, in einer Schnittansicht, die einen Blick ins Innere des Spinners 18 mit der geschnittenen Rotornabe 34 erlaubt. An der geschnittenen Rotornabe 34 sind die Einstiegsöffnungen 48 deutlich zu erkennen. Die Einstiegsöffnungen 48 erlauben den Übertritt aus einem Bereich unter dem Ausbuchtungsabschnitt 30 in das Innere der Rotornabe 34. An der Fig. 3b ist deutlich zu erkennen, dass die maximale Höhe der Ausbuchtung 30 ungefähr der Höhe des Blattanschlusses 32 entspricht.

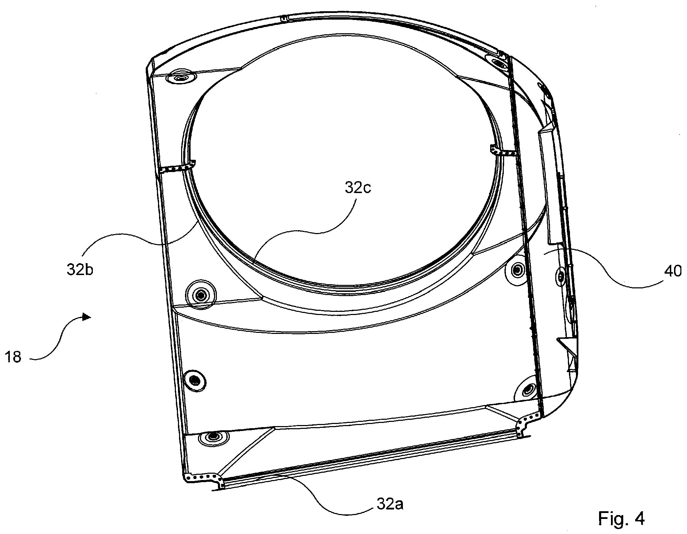

Fig. 4 zeigt den erfindungsgemäßen Spinner 18 mit aufgesetztem Frontabschnitt 40 in einer seitlichen Ansicht. Der Spinner 18steht in einer Y-Position, bei der die mit 32a gekennzeichnete Rotorblattöffnung nach unten weist. Die ungefähr bei 2 Uhr stehende Rotorblattöffnung 32b des Spinners 18 ist aufgrund der seitlichen Ansicht perspektivisch leicht verzerrt. Durch die Rotorblattöffnung 32b erfolgt der Blick auf die bei 10 Uhr stehende Rotorblattöffnung 32c. Deutlich ist in der Fig. 4 zu erkennen, wie der Ausbuchtungsabschnitt 30 zwischen den Rotorblattöffnungen 32b und 32c vorsteht und zusätzlichen Raum innerhalb des Spinners 18 schafft.

### Bezugszeichenliste

- 10: Windenergieanlage
- 12: Turm
- 14: Maschinenhaus
- 18: Spinner
- 20: Rotorblätter
- 22: Lüftungsöffnungen
- 24: Luken
- 26: Befestigungspunkte
- 28: Anschlussbereich
- 30: Ausbuchtungsabschnitte
- 32: Rotorblattöffnungen
- 34: Rotornabe
- 36: Befestigungsflansch
- 38: Höhe
- 40: Frontabschnitt
- 42: Breite
- 44: kreisförmiger Anschluss
- 46: Wellenöffnung
- 48: Einstiegsöffnung

## Patentansprüche

1. Spinner für eine Rotornabe einer Windenergieanlage mit einer zentralen Wellenöffnung (46) und drei gleichmäßig über den Umfang des Spinners verteilten Rotorblattöffnungen (32a, b, c) für Rotorblattanschlüsse, wobei die Wellenöffnung (46) eine Kreisform aufweist, deren Mittelpunkt auf einer Drehachse des Spinners liegt, und zwischen zwei Rotorblattöffnungen (32a, b, c) ein Ausbuchtungsabschnitt (30) vorsteht, in dem der Abstand zur Drehachse größer ist als im Bereich der Rotorblattöffnungen (32a, b, c), wobei
die Ausbuchtungsabschnitte (30) an der Wellenöffnung (46) einen insgesamt kreisförmigen Querschnitt bilden und ein Frontabschnitt (40) vorgesehen ist, der eine Kreisform aufweist und dessen Mittelpunkt auf der Drehachse liegt, wobei die Ausbuchtungsabschnitte (30) an dem Frontabschnitt (40) einen kreisförmigen Querschnitt bilden, wobei der Abstand der Innenseite des Ausbuchtungsabschnitts (30) zu der Drehachse von der Wellenöffnung (46) aus zunimmt und nach Erreichen eines Maximalwerts zu dem Frontabschnitt (40) hin abnimmt, **dadurch gekennzeichnet, dass**
- der Ausbuchtungsabschnitt (30) an der zur Wellenöffnung weisenden Seite des Spinners (18) eine verschwindende Höhe (38) besitzt und auch im Bereich des Frontabschnitts (40) eine verschwindende Höhe (38) besitzt und
- zudem in Umfangsrichtung des Spinners auf einer Innenseite des Ausbuchtungsabschnitts (30) eine ebene Tritt- und Standfläche für einen Servicemitarbeiter vorgesehen ist, auf der stehend ein Servicearbeiter in diversen Positionen Arbeiten an der Rotornabe ausführen kann.

2. Spinner nach Anspruch 1, **dadurch gekennzeichnet, dass** innerhalb mindestens eines Ausbuchtungsabschnitts (30) Arbeitsbereiche vorgesehen sind.

3. Spinner nach einem der Ansprüche 1 bis 2, **dadurch gekennzeichnet, dass** mindestens ein Ausbuchtungsabschnitt (30) eine definierte Breite über den Umfang des Spinners besitzt.

4. Spinner nach Anspruch 3, **dadurch gekennzeichnet, dass** die maximale Breite des mindestens einen Ausbuchtungsabschnitts (30) dem minimalen Abstand zwischen zwei Rotorblattöffnungen (32a, b, c) entspricht.

5. Spinner nach einem der Ansprüche 1 bis 4, **dadurch gekennzeichnet, dass** an der Wellenöffnung (46) ein umlaufender Regenabweiser vorgesehen ist, der über die Wellenöffnung (46) vorsteht.

6. Spinner nach einem der Ansprüche 1 bis 5, **dadurch gekennzeichnet, dass** der Frontabschnitt (40) als ein separates Bauteil ausgebildet ist, das lösbar mit dem Spinner verbunden ist.

## Claims

1. A Spinner for a rotor hub of a wind turbine with a central shaft opening (46) and three rotor blade openings (32a, b, c) for rotor blade connections uniformly distributed over the circumference of the spinner, wherein the shaft opening (46) has a circular shape, the centre of which lies on an axis of rotation of the spinner, and between two rotor blade openings (32a, b, c) a convex section (30) projects, in which the distance to the axis of rotation is greater than in the region of the rotor blade openings (32a, b, c), wherein the convex sections (30) at the shaft opening (46) form a generally circular cross-section and a front section (40) is provided which has a circular shape and the centre of which lies on the axis of rotation, the convex sections (30) at the front section (40) forming a circular cross-section, the distance between the inside of the convex section (30) and the axis of rotation increasing from the shaft opening (46) and decreasing towards the front section (40) after a maximum value has been reached, **characterized in that**
- the convex section (30) has a disappearing height (38) on the side of the spinner (18) facing the shaft opening and also has a disappearing height (38) in the region of the front section (40), and
- in addition, in the circumferential direction of the spinner, a flat tread and standing surface is provided on an inside of the convex section (30) for a service technician, on which a service technician can carry out work on the rotor hub in various standing positions.

2. A spinner according to claim 1, **characterized in that** working areas are provided within at least one convex section (30).

3. A spinner according to any one of claims 1 to 2, **characterized in that** at least one convex section (30) has a defined width over the circumference of the spinner.

4. A spinner according to claim 3, **characterized in that** the maximum width of the at least one convex sections (30) corresponds to the minimum distance between two rotor blade openings (32a, b, c).

5. A spinner according to one of the claims 1 to 4, **characterized in that** a circumferential rain deflector is provided at the shaft opening (46), the rain deflector protruding beyond the shaft opening (46).

6. A spinner according to any one of claims 1 to 5, **characterized in that** the front section (40) is formed as a separate member detachably connected to the spinner.

## Revendications

1. Casserole d'un moyeu de rotor d'une éolienne dotée d'une ouverture d'arbre (46) centrale ainsi que de trois ouvertures de pale de rotor (32a, b, c) réparties uniformément sur le pourtour de la casserole et destinées aux raccords de pale de rotor, dans laquelle l'ouverture d'arbre (46) présente une forme circulaire, dont le centre se situe sur un axe de rotation de la casserole, et une partie renflée (30) fait saillie entre deux ouvertures de pale de rotor (32a, b, c), à l'intérieur de laquelle la distance par rapport à l'axe de rotation est plus grande que dans la zone des ouvertures de pale de rotor (32a, b, c), dans laquelle
les parties renflées (30) forment une section globalement circulaire et une partie frontale (40) est prévue, qui présente une forme circulaire et dont le centre se situe sur l'axe de rotation, dans laquelle les parties renflées (30) forment une section circulaire sur la partie frontale (40), dans laquelle la distance de la face intérieure de la partie renflée (30) par rapport à l'axe de rotation augmente à partir de l'ouverture d'arbre (46) et diminue en direction de la partie frontale (40) après avoir atteint une valeur maximale, **caractérisée en ce**
- **que** la partie renflée (30) possède une hauteur infiniment petite (38) sur la face de la casserole (18) tournée vers l'ouverture d'arbre et aussi une hauteur infiniment petite (38) dans la zone de la partie frontale (40) et
- **qu'**une surface de piétinement et d'appui plane destinée à un technicien de SAV est prévue de surcroît sur une face intérieure de la partie renflée (30) dans la direction circonférentielle de la casserole, sur laquelle un technicien de SAV se tenant debout peut exécuter des travaux au niveau du moyeu de rotor dans diverses positions.

2. Casserole selon la revendication 1, **caractérisée en ce que** des zones de travail sont prévues à l'intérieur au moins d'une partie renflée (30).

3. Casserole selon l'une des revendications 1 à 2, **caractérisée en ce qu'**au moins une partie renflée (30) possède une largeur définie sur le pourtour de la casserole.

4. Casserole selon la revendication 3, **caractérisée en ce que** la largeur maximale de ladite partie renflée (30) au moins correspond à l'écart minimal entre deux ouvertures de pale de rotor (32a, b, c).

5. Casserole selon l'une des revendications 1 à 4, **caractérisée en ce qu'**un déflecteur de pluie périphérique est prévu sur l'ouverture d'arbre (46), qui fait saillie au-dessus de l'ouverture d'arbre (46).

6. Casserole selon l'une des revendications 1 à 5, **caractérisée en ce que** la partie frontale (40) est conçue sous la forme d'un composant séparé, qui est relié à la casserole de façon amovible.
